# EUROPÄISCHE PATENTANMELDUNG

(11) **EP 0 825 388 A2**
(43) Veröffentlichungstag der Anmeldung: **25.02.1998**
(21) Anmeldenummer: 97890163.5
(22) Anmeldetag: 14.08.1997
(51) Int. Cl.: F24D 3/08

(54) **Anlage zum Bereiten von Brauchwasser**

(30) Priorität: 19.08.1996 AT 1482/96
(71) Anmelder: Huber, Walter, Dr. Dipl-.Ing., 1030 Wien (AT)
(72) Erfinder: Huber, Walter, Dr. Dipl-.Ing., 1030 Wien (AT)
(74) Vertreter: Hübscher, Heiner, Dipl.-Ing.

(57) **Zusammenfassung**

Eine Anlage (1) zum Bereiten von Brauchwasser besteht aus einem an einen Heizungskreislauf (3) angeschlossenen Heizungskessel (2), einem eine Kaltwasserzu- und eine Warmwasserableitung (5, 6) umfassenden Brauchwasserspeicher (4) und einem Heizungswasser/Brauchwasser-Wärmetauscher (7) sowie einem Zusatzwärmetauscher (11) zur Brauchwassererwärmung. Um auf einfache Weise die Restwärme der Heizungskesselabgase nutzen zu können, ist als Zusatzwärmetauscher (11) ein mit den Abgasen des Heizungskessels (2) beaufschlagbarer Abgas/Brauchwasser-Wärmetauscher vorgesehen, der aus korrosionsfestem Material besteht und einen Kondensatablaß (13) aufweist.

## Beschreibung

Die Erfindung bezieht sich auf eine Anlage zum Bereiten von Brauchwasser mit einem an einen Heizungskreislauf angeschlossenen Heizungskessel, einen eine Kaltwasserzu- und eine Warmwasserableitung umfassenden Brauchwasserspeicher und einen Heizungswasser/Brauchwasser-Wärmetauscher sowie einen Zusatzwärmetauscher zur Brauchwassererwärmung.

Solche mit einem Heizungskessel kombinierte Brauchwasserbereiter sind seit langem bekannt und über verschiedenste hydraulische Schaltungen zum Erwärmen des Brauchwassers an den Heizungskreislauf des Heizkessels angeschlossen, wobei zur Wärmeübertragung vom Heizungswasser auf das Brauchwasser Heizungswasser/Brauchwasser-Wärmetauscher eingesetzt sein können, die innerhalb des Brauchwasserspeichers oder auch außerhalb des Brauchwasserspeichers liegen. Zur ergänzenden heizungswasserunabhängigen Brauchwassererwärmung gibt es auch schon Zusatzwärmetauscher im Brauchwarmwasserspeicher, die bisher allerdings an eigene Heizsysteme, beispielsweise Solarheizungssysteme, angeschlossen sind und einen entsprechenden Installationsaufwand mit sich bringen.

Bei konventionellen Heizungskesseln kann im Gegensatz zu sogenannten Brennwertkesseln dem Abgas aus der Verbrennung nur soweit Wärme entzogen und dem Heizsystem zugeführt werden, daß die Abgastemperatur an keiner Stelle den Taupunkt unterschreitet und Kondensat ausfällt, da dieses Kondensat aufgrund der üblichen Kessel konstruktionen mit Wärmetauschern aus geschweißtem Stahlblech oder zusammengesetzten Gußeisengliedern Korrosionsschäden mit sich brächte. Bei diesen Kesseln darf daher eine bestimmte untere Abgastemperatur nicht unterschritten werden, wodurch ein Teil der fühlbaren Abgaswärme und die Verdampfungswärme des im Abgas enthaltenen Wasserdampfes ungenutzt bleiben und die Restwärme in der Energiebilanz den Verlusten zugerechnet werden muß.

Der Erfindung liegt daher die Aufgabe zugrunde, diese Mängel zu beseitigen und eine Anlage der eingangs geschilderten Art zu schaffen, die auf vergleichsweise aufwandsarme Weise eine verbesserte Restwärmenutzung der Abgase erlaubt.

Die Erfindung löst diese Aufgabe dadurch, daß als Zusatzwärmetauscher ein mit den Abgasen des Heizungskessels beaufschlagbarer Abgas/Brauchwasser-Wärmetauscher vorgesehen ist, der aus korrosionsfestem Material besteht und einen Kondensatablaß aufweist. Durch diesen Zusatzwärmetauscher kann somit das Brauchwasser über das Heizungswasser und zusätzlich über die Abgase des vorgeschalteten Heizungskessels erwärmt werden, so daß die Anlage wegen der tiefergehenden Abkühlung der Kesselabgase auch deren Restwärme bzw. den ganzen Brennstoffbrennwert nutzt, wobei die Restwärme der Abgase, also die fühlbare Wärme und die Verdampfungswärme, dem Brauchwasser direkt und gegebenenfalls indirekt über das Brauchwasser dem Heizungswasser zuführbar ist. Durch eine geeignete Ausbildung bzw. Anordung des Heizungswasser/Brauchwasser-Wärmetauschers läßt sich sowohl Wärme vom Heizungswasser an das Brauchwasser als auch vom Brauchwasser an das Heizungswasser übertragen, was die Nutzungsmöglichkeiten der Restwärme erhöht. Der Zusatzwärmetauscher ist abgasseitig einem konventionellen Heizungskessel nachgeschaltet und muß daher aus geeignetem, korrosionsfestem Werkstoff hergestellt sein und auch eine das Kondensat sammelnde bzw. ableitende Kondensatablaßeinrichtung aufweisen. Die minimalen Kernstromtemperaturen des Abgases beim Verlassen eines solchen öl- oder gasbefeuerten Heizungskessels liegen etwa bei ca. 120 °C und je nach Betriebszustand des Brauchwasserspeichers kann dieses Abgas im Zusatzwärmetauscher auf 20 - 70 °C weiter abgekühlt und dieser Anteil der fühlbaren Wärme an das Brauchwasser übertragen werden. Außerdem unterschreitet bei entsprechend tiefer Brauchwassertemperatur, die bei einem Zapfen von Warmwasser und Nachströmen von Kaltwasser aus dem Versorgungsnetz auftritt, die Abgastemperatur den Taupunkt des Abgases und auch ein Teil der Verdampfungswärme des Wasserdampfes im Abgas läßt sich so zusätzlich zur Brauchwassererwärmung nutzen. Ist der Brauchwasserspeicher geladen, also die gewünschte Brauchwassertemperatur erreicht, kann ein weiteres Wärmeangebot der Abgasrestwärme indirekt über den Heizungswasser/Brauchwasser-Wärmetauscher an das Heizungswasser abgegeben werden, so daß es zu einer beträchtlichen Wirkungsgradsteigerung kommt, wobei die Art der Einbindung des Wärmetauscherkreislaufes in den Heizungskreislauf an sich von untergeordneter Bedeutung ist.

Zweckmäßigerweise kann für die Abgasleitung des Heizungskessels eine den Zusatzwärmetauscher umgehende, klappengesteuerte Bypassleitung vorgesehen sein, so daß bei fehlendem Wärmebedarf im Brauchwasserspeicher das Abgas unter Umgehung des Zusatzwärmetauschers direkt in den Abgasfang ableitbar ist und keine Überhitzung od. dgl. des Brauchwasserspeichers befürchtet zu werden braucht.

Grundsätzlich könnte der Zusatzwärmetauscher außerhalb des Brauchwasserspeichers angeordnet sein und das Brauchwasser über einen eigenen Pumpenkreislauf durch diesen Zusatzwärmetauscher strömen. Vorteilhafter hinsichtlich der Wärmeverluste. des Platzbedarfes und des Konstruktionsaufwandes ist es aber, den Zusatzwärmetauscher in den Warmwasserspeicher zu integrieren. Dabei kann der Zusatzwärmetauscher aus einem unteren und einem oberen Abgassammler und die Sammler miteinander verbindenden, innerhalb des Brauchwasserspeichers verlaufenden Wärmetauscherrohren bestehen, wobei einer der Sammler an die Abgasleitung des Heizungskessels anschließt und beide Sammler über eine Ableitung bzw. eine Bypassleitung mit einem Abgasfang verbunden sind. Es werden verhältnismäßig große Wärmetauscherflächen erreicht und es ergibt sich eine platzsparende Leitungsführung, wobei je nach Anschluß des unteren oder oberen Sammlers an die Abgasleitung ein zum Brauchwasserfluß innerhalb des Warmwasserspeichers gleich- oder gegengerichteter Abgasstrom erzielt wird.

Eine andere Ausführungsmöglichkeit ergibt sich, wenn der Zusatzwärmetauscher aus einem unteren Sammler mit einem an die Abgasleitung des Heizungskessels anschließenden Eingangsabschnitt und einem an eine in einen Abgasfang führende Ableitung anschließenden Ausgangsabschnitt und die beiden Abschnitte miteinander verbindenden, innerhalb des Brauchwasserspeichers verlaufenden Wärmetauscherrohren besteht, wobei der Strömungsweg für die Abgase mittels einer Steuerklappe wahlweise durch die Wärmetauscherrohre oder direkt durch den Sammler freigebbar ist. Hier ist der Wärmetauscher im Bereich der Kaltwasserzuleitung in den Brauchwasserspeicher angeordnet und es kommt auch bei kleineren Abmessungen des Wärmetauschers zu günstigen Wärmeübertragungsverhältnissen.

Zur Verbesserung des Wärmeübergangs können die Wärmetauscherrohe Turbulatoren aufnehmen und eine einfache Bauweise ergibt sich dadurch, daß die Sammler aus einer auf den Brauchwasserspeicher aufgedichteten Wanne bestehen.

In der Zeichnung ist der Erfindungsgegenstand rein schematisch veranschaulicht, und zwar zeigen
- Fig. 1: eine erfindungsgemäße Anlage im Schema und
- Fig. 2: den Brauchwasserspeicher dieser Anlage in einem etwas abgeänderten Ausführungsbeispiel.

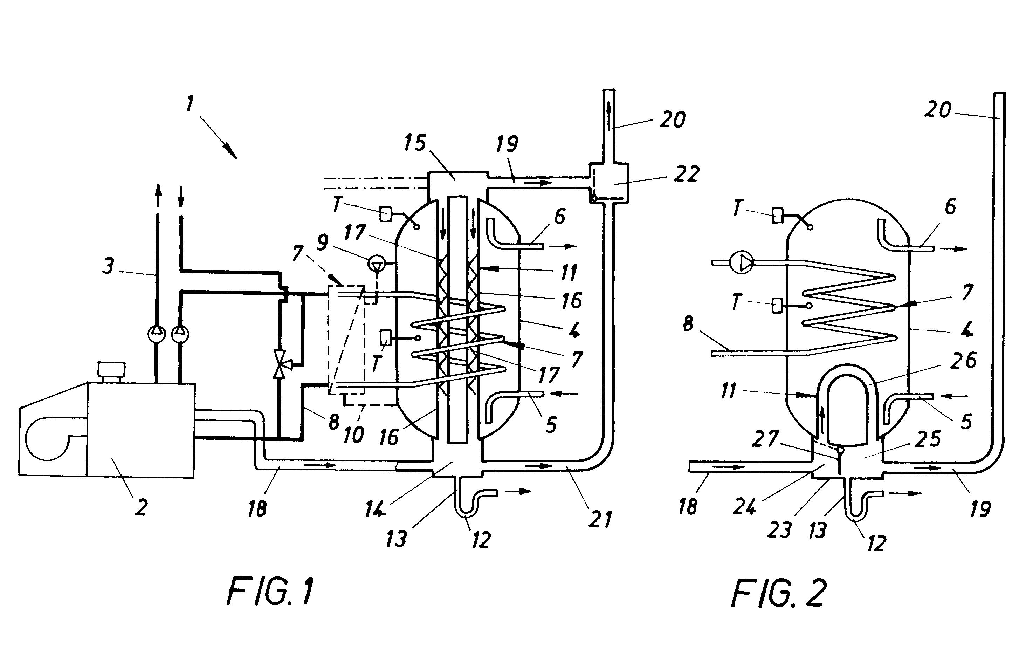

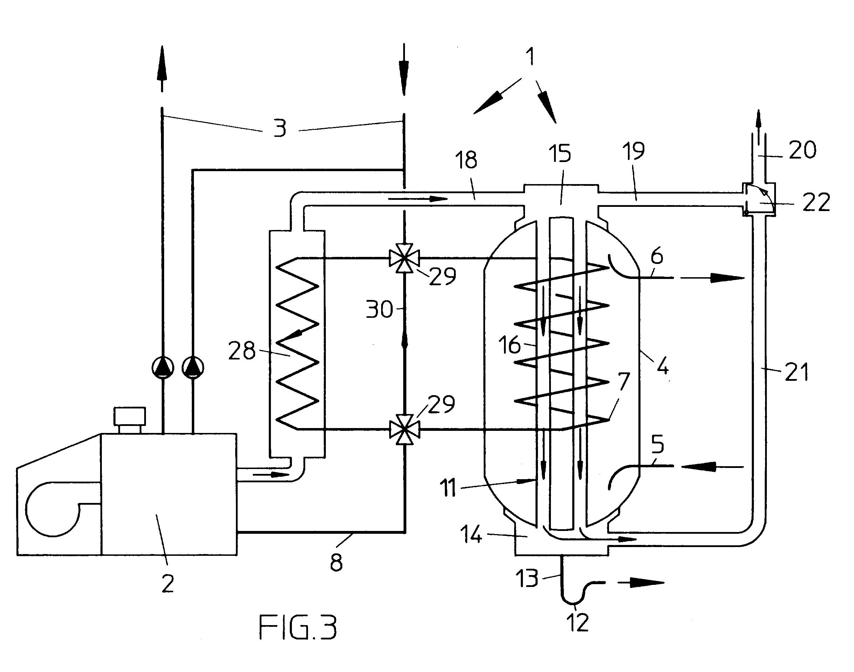

Eine Anlage 1 zum Bereiten von Brauchwasser umfaßt einen brennerbetriebenen Heizungskessel 2, an den ein Heizungskreislauf 3 angeschlossen ist, und einen Brauchwasserspeicher (4) mit einer unteren Kaltwasserzuleitung 5 und einer oberen Warmwasserableitung 6. Zur Brauchwassererwärmung ist ein Heizungswasser/Brauchwasser-Wärmetauscher 7 vorgesehen, der über einen auf geeignete Weise dem Heizungskreislauf 3 zugeschalteten Wärmetauscherkreislauf 8 vom Heizungswasser des Heizungskreislaufes 3 beaufschlagt wird. Der Wärmetauscher 7 kann innerhalb des Brauchwasserspeichers 4 angeordnet sein, er kann aber auch, wie strichliert in Fig. 1 angedeutet, außerhalb liegen, wenn das Brauchwasser mittels einer Pumpe 9 über eine Zirkulationsleitung 10 durch diesen Wärmetauscher gefördert wird.

Um nun die Restwärme der Abgase aus dem Heizungskessel nutzen zu können, werden diese Abgase in einem Zusatzwärmetauscher 11 weiter abgekühlt und deren fühlbare Wärme bzw. Verdampfungswärme dem Brauchwasser direkt und dem Heizungswasser indirekt zugeführt. Dazu ist der Zusatzwärmetauscher 11 aus korrosionsfestem Material hergestellt und mit einem ein Siphon 12 bildenden Kondensatablaß 13 ausgestattet, so daß er unbeschadet einer Taupunktunterschreitung mit den Abgasen beaufschlagt werden kann.

Gemäß dem Ausführungsbeispiel nach Fig. 1 besteht der Zusatzwärmetauscher 11 aus einem unteren Abgassammler 14, der auch den Kondensatablaß 13 aufweist, einem oberen Abgassammler 15 sowie innerhalb des Brauchwasserspeichers 4 verlaufende, die Sammler 14, 15 miteinander verbindende Wärmetauscherrohre 16, die zur Erhöhung des Wärmeüberganges Turbulatoren 17 aufnehmen können. Die Abgasleitung 18 des Heizungskessels 2 schließt an den unteren Sammler 14 an und vom oberen Sammler 15 gibt es eine Ableitung 19 zu einem Abgasfang 20, so daß die Abgase aus dem Heizungskessel 2 über die Abgasleitung 18 in den unteren Abgassammler 14 strömen, von hier durch die Wärmetauscherrohre 16 innerhalb des Brauchwasserspeichers 4 hinauf zum oberen Abgassammler 15 und dann durch die Ableitung 19 in den Abgasfang 20 gelangen und auf ihrem Weg die Restwärme an das Brauchwasser abgeben können. Um wahlweise die Abgase am Brauchwasserspeicher 4 vorbeiströmen zu lassen, gibt es eine Bypassleitung 21, die vom unteren Abgassammler 14 ausgeht und direkt in den Abgasfang 20 mündet. Zur Steuerung ist eine Steuerungsklappe 22 im Mündungsbereich der Bypassleitung 21 und der Ableitung 19 in den Abgasfang 20 vorgesehen, mit der wahlweise der Strömungsweg durch den Zusatzwärmetauscher 11 oder durch die Bypassleitung 21 freigegeben werden kann.

We strichpunktiert in Fig. 1 angedeutet, läßt sich die Abgasleitung 18 auch an den oberen Abgassammler 15 anschließen, so daß dann bei sonst im wesentlichen gleicher Konstruktion die Abgase von oben nach unten durch den Zusatzwärmetauscher 11 strömen und eine Brauchwassererwärmung im Gegenstromprinzip erfolgt. Hier entspricht dann die Bypassleitung der Ableitung 19, die den oberen Abgassammler 15 mit dem Abgasfang 20 verbindet, und die Ableitung der Bypassleitung 21, die nach dem Zusatzwärmetauscher zum Abgasfang 20 führt..

Wird beispielsweise über die Warmwasserableitung 6 Warmwasser aus dem Brauchwasserspeicher 4 gezapft, strömt Kaltwasser durch die untere Kaltwasserzuleitung 5 in den Brauchwasserspeicher 4 nach und aufgrund der die Abkühlung erfassenden Temperaturfühlers T wird der Brenner des Heizungskessels 2 eingeschaltet. Ein Teil der Wärme wird dem Brauchwasser mittels des Heizungswassers aus dem Heizungskreislauf 3 über den Wärmetauscherkreis 8 und dem Heizungswasser/Brauchwasser-Wärmetauscher 7 zugeführt, ein anderer Teil der Wärme wird dem Brauchwasser direkt mit dem Abgas aus dem Heizungskessel 2 über den Zusatzwärmetauscher 11 zugeführt. Entstehendes Kondensat wird über den Kondensatablaß 13 abgezogen. Ist der Brauchwasserspeicher 4 durchgeladen, also die gewünschte Brauchwassertemperatur erreicht, schaltet der Brenner wieder ab. Wird nun Wärme im Heizungskreislauf gefordert, schaltet der Brenner des Heizungskessels 2 ebenfalls ein und erwärmt das Heizungswasser des Heizungskreislaufes 3. Gleichzeitig wird dem Brauchwasserspeicher über den Zusatzwärmetauscher 11 Wärme zugeführt. Ist nun die maximale Brauchwassertemperatur bereits erreicht, wird über den Heizungswasser/Brauchwasser-Wärmetauscher 7 die über das Abgas und den Zusatzwärmetauscher 11 zugeführte Wärme an das Heizungswasser des Heizungskreislaufes 3 rückgeführt, wobei je nach Zuschaltung des Wärmetauscherkreises 8 an den Heizungskreislauf 3 diese Rückführung über den Vorlauf oder den Rücklauf erfolgen kann. Ist eine Wärmeabgabe nicht mehr möglich, weil die Heizungswassertemperatur höher liegt als die Brauchwassertemperatur, wird die Steuerklappe 22 umgeschaltet und die Abgase über die Bypassleitung 21 bzw. 19 direkt in den Abgasfang 20 geleitet. Sinkt die Brauchwassertemperatur wieder wegen einer Wärmeabgabe über den Heizungswasser/Brauchwasser-Wärmetauscher 7 und/oder wegen einer Zapfung von Warmwasser, schaltet die Steuerklappe 22 wieder um und leitet das Abgas durch den Zusatzwärmetauscher 11.

Beim Ausführungsbeispiel nach Fig. 2 ist ein Brauchwasserspeicher 4 mit einer abgeänderten Bauart des Zusatzwärmetauschers 11 vorgesehen. Hier besteht der Zusatzwärmetauscher 11 auf einem unteren Abgassammler 23, der in einen an die Abgasleitung 18 des Heizungskessels 2 anschließenden Eingangsabschnitt 24 und einen an die in den Abgasfang 20 führende Ableitung 19 anschließenden Ausgangsabschnitt 24 unterteilt ist. Innerhalb des Brauchwasserspeichers 4 verlegte, im wesentlichen U-förmig verlaufende Wärmetauscherrohre 26 verbinden die beiden Abschnitte 24, 25 miteinander, wobei eine Steuerklappe 27 wahlweise den Strömungsweg durch die Wärmetauscherrohre 26 oder direkt durch den Abgassammler 23 freigibt. Die Funktion ist ähnlich wie beim Ausführungsbeispiel nach Fig. 1, nur wird hier über den Zusatzwärmetauscher 11 das Brauchwasser im unteren Speicherbereich erwärmt, was durch die Kaltwasserzufuhr eine tiefere Rauchgasabkühlung erlaubt und außerdem oberhalb des Zusatzwärmetauschers 11 einen Freiraum für die Anordnung des Heizungswasser/Brauchwasser-Wärmetauschers 7 schafft. Auch dieser Zusatzwärmetauscher 11 muß selbstverständlich aus korrosionsfestem Material bestehen und einen Kondensatablaß 13 aufweisen.

## Patentansprüche

1. Anlage (1) zum Bereiten von Brauchwasser mit einem an einen Heizungskreislauf (3) angeschlossenen Heizungskessel (2), einen eine Kaltwasserzu- und eine Warmwasserableitung (5, 6) umfassenden Brauchwasserspeicher (4) und einen Heizungswasser/Brauchwasser-Wärmetauscher (7) sowie einen Zusatzwärmetauscher (11) zur Brauchwassererwärmung, dadurch gekennzeichnet, daß als Zusatzwärmetauscher (11) ein mit den Abgasen des Heizungskessels (2) beaufschlagbarer Abgas/Brauchwasser-Wärmetauscher vorgesehen ist, der aus korrosionsfestem Material besteht und einen Kondensatablaß (13) aufweist.

2. Anlage nach Anspruch 1, dadurch gekennzeichnet, daß für die Abgasleitung (18) des Heizungskessels (2) eine den Zusatzwärmetauscher (11) umgehende, klappengesteuerte Bypassleitung (21; 19) vorgesehen ist.

3. Anlage nach Anspruch 1 oder 2, dadurch gekennzeichnet, daß der Zusatzwärmetauscher (11) aus einem unteren und einem oberen Abgassammler (14, 15) und die Sammler miteinander verbindenden, innerhalb des Brauchwasserspeichers (4) verlaufenden Wärmetauscherrohren (16) besteht, wobei einer der Sammler (14; 15) an die Abgasleitung (18) des Heizungskessels (2) anschließt und beide Sammler (14; 15) über eine Ableitung (19) bzw. eine Bypassleitung (21) mit einem Abgasfang (20) verbunden sind.

4. Anlage nach Anspruch 1 oder 2. dadurch gekennzeichnet, daß der Zusatzwärmetauscher (11) aus einem unteren Sammler (23) mit einem an die Abgasleitung (18) des Heizungskessels (2) anschließenden Eingangsabschnitt (24) und einem an eine in einen Abgasfang (20) führende Ableitung (19) anschließenden Ausgangsabschnitt (25) und die beiden Abschnitte (24, 25) miteinander verbindenden, innerhalb des Brauchwasserspeichers (4) verlaufenden Wärmetauscherrohren (26) besteht, wobei der Strömungsweg für die Abgase mittels einer Steuerklappe (27) wahlweise durch die Wärmetauscherrohre (26) oder direkt durch den Sammler (23) freigebbar ist.

5. Anlage nach einem der Ansprüche 2 bis 4, dadurch gekennzeichnet, daß die Sammler (14, 15, 23) aus einer auf den Brauchwasserspeicher (4) aufgedichteten Wanne bestehen und/oder die Wärmetauscherrohre (16) Turbulatoren (17) aufnehmen.
